Europäisches Patentamt

(19) European Patent Office

Office européen des brevets

(11) Numéro de publication: **0 199 609**
**B1**

(12) **FASCICULE DE BREVET EUROPEEN**

(45) Date de publication du fascicule du brevet:
**18.01.89**

(21) Numéro de dépôt: **86400393.4**

(22) Date de dépôt: **25.02.86**

(51) Int. Cl.⁴: **B 32 B 17/10, C 09 J 3/16,**
**C 08 G 18/65, C 08 G 18/10,**
**C 08 G 18/32**

(54) Couche adhésive à base de polyuréthane et son utilisation dans les vitrages feuilletés.

(30) Priorité: **26.02.85 FR 8502740**

(43) Date de publication de la demande:
**29.10.86 Bulletin 86/44**

(45) Mention de la délivrance du brevet:
**18.01.89 Bulletin 89/3**

(84) Etats contractants désignés:
**DE FR GB IT SE**

(56) Documents cités:
**FR-A- 1 386 762**
**FR-A- 2 168 506**

(73) Titulaire: **SAINT-GOBAIN VITRAGE, Les**
**Miroirs 18, avenue d'Alsace, F-92400 Courbevoie (FR)**

(72) Inventeur: **Frisch, Kurt Charles, Dr., 17986 Parke Lane,**
**Grosse Ile Michigan 48138 (US)**
Inventeur: **Klempner, Daniel, Dr., 32411 Queensboro,**
**Farmington Hills Michigan 48018 (US)**
Inventeur: **Rädisch, Helmer, Dr., Nizzaallee 36,**
**D-5100 Aachen (DE)**
Inventeur: **Holzer, Gerhard, Dr., Dr. Josef**
**LambyStrasse 2, D-5100 Aachen (DE)**

(74) Mandataire: **Muller, René et al, SAINT-GOBAIN**
**RECHERCHE 39, quai Lucien Lefranc,**
**F-93304 Aubervilliers (FR)**

**Description**

La présente invention concerne une couche adhésive à base de polyuréthane et son utilisation notamment en tant que couche transparente adhésive dans la fabrication des vitrages feuilletés. Plus particulièrement, l'invention concerne une couche adhésive à base d'un polyuréthane thermoplastique résistant à l'humidité formé à partir de polyols non sensibles à l'humidité, de polyisocyanates aliphatiques et d'un allongeur de chaîne particulier.

Les vitrages feuilletés sont largement utilisés, notamment dans les véhicules à moteur ou dans le bâtiment. Ces vitrages comportent généralement deux feuilles de verre et une couche intercalaire d'un matériau présentant des propriétés d'absorbeur d'énergie telle que le polyvinylbutyral. Récemment, il a été décrit un nouveau type de vitrages feuilletés de sécurité dans lequel la feuille de verre orientée vers l'intérieur du véhicule est recouverte d'une couche ou feuille d'un matériau présentant des propriétés d'antilacération et d'autocicatrisation. Les publications de brevets français 2 398 606 et européen 0 054 491 décrivent par exemple une telle structure de vitrage feuilleté. La couche présentant des propriétés d'antilacération et d'autocicatrisation, notamment un polyuréthane thermodurcissable, est liée à la feuille de verre par une couche adhésive. La publication du brevet français 2 398 606 citée ci-dessus décrit l'utilisation d'un polyuréthane thermoplastique en tant que couche adhésive et notamment l'utilisation d'un polyuréthane formé à partir d'un polyesterdiol. Bien que donnant généralement satisfaction, il peut s'avérer que ce type de polyuréthane perde une partie de ses propriétés adhésives et que la couche devienne légèrement trouble dans des conditions de température et d'humidité sévères par exemple par une exposition prolongée dans de l'eau bouillante.

Dans un domaine technique différent des vitrages feuilletés, on connaît d'après le document FR-A-1 386 762 un vernis à base de polyuréthane produit de la réaction d'un diisocyanate sur un alcool gras obtenu par dimérisation ou trimérisation d'esters méthyliques d'acide gras non saturé (en $C_{18}$) et réduction ultérieure du groupe ester en groupe alcoolique. Ce vernis est utilisé en tant que couche externe de peinture.

L'invention propose une nouvelle couche adhésive à base de polyuréthane pouvant être utilisée en tant que couche adhésive dans la fabrication des vitrages feuilletés, qui conserve ses propriétés de transparence et d'adhésion, même dans des conditions sévères de température et d'humidité.

La couche adhésive selon l'invention est à base d'un polyuréthane formé à partir d'au moins un diol de masse moléculaire supérieure à 300, non sensible à l'humidité, d'au moins un diisocyanate aliphatique ou cycloaliphatique et d'au moins un allongeur de chaîne qui est un diol issu de la réduction des groupes carboxyliques en groupes alcooliques de l'acide dimérique; cet acide à 36 atomes de carbone est un produit de dimérisation du type Diels-Alder à partir d'acides gras insaturés comprenant 18 atomes de carbone. Il est un plus caractérisé par deux ou plusieurs branches latérales alkylées et au moins une double liaison oléfinique. Un tel diol est généralement appelé dimérol, et on utilisera cette appellation dans la suite de la description.

L'invention concerne également l'application de cette couche dans les vitrages feuilletés, notamment en tant que couche adhésive transparente intercalaire entre des feuilles de verre et/ou de matière plastique. Elle concerne encore l'utilisation de cette couche en tant que couche adhésive pour l'assemblage de la couche présentant des propriétés d'antilacération et d'autocicatrisation citée ci-dessus avec un support monolitique ou feuilleté en verre ou en matière plastique.

En tant que polyols non sensibles à l'humidité pouvant être utilisés pour former la composition de polyuréthane selon l'invention, on peut citer les polyétherdiols tels les poly (oxypropylène) glycols, les poly (1,4-oxybutylène)glycols, ou encore les polycarbonatepolyols, les polybutadiènepolyols, les polycaprolactonepolyols de masse moléculaire comprise entre 300 et 3000 environ.

En tant qu'isocyanates aliphatiques pouvant être utilisés pour former la couche de polyuréthane, on peut citer les isocyanates aliphatiques suivants: 4,4'-méthylène-bis(cyclohexyl)diisocyanate, trans-cyclohexane -1,4 diisocyanate, isophorone diisocyanate, hexaméthylènediisocyanate, 1,3-xylylènediisocyanate, 1,4-xylylènediisocyanate, méta et para-tétraméthylxylènediisocyanate, diméryldiisocyanate, menthanediisocyanate etc....

Pour préparer la composition adhésive selon l'invention, on peut effectuer la réaction entre les composants en milieu solvant de préférence. On peut utiliser le méthode du prépolymère, c'est-à-dire que l'on fait réagir le polyol avec un excès de diisocyanate pour former un prépolymère, c'est-à-dire un produit d'addition comprenant des groupements isocyanates libres. On additionne ensuite l'allongeur de chaîne du type dimérol. On peut encore utiliser la technique d'une seule étape, en mélangeant directement le polyol, le diisocyanate et l'allongeur de chaîne du type dimérol.

Lorsqu'on prépare la composition adhésive en milieu solvant, on peut utiliser en tant que solvant par exemple le dioxane, le tétrahydrofurane, l'acétate de cellosolve, le diméthylformamide, le xylène, le toluène, la méthyléthylcétone, la méthylisobutylcétone, l'acétate d'éthyle ou un mélange de ces solvants. On peut encore utiliser des alcools tel l'isopropylalcool pour dissoudre les polymères.

Pour accélérer la réaction de polymérisation du polyuréthane, ou peut utiliser la chaleur et/ou des catalyseurs. En tant que catalyseur, on peut utiliser par exemple des organo-étain tels que le dibutyldilaurate d'étain, l'oxyde de tributylétain, l'octoate d'étain, un catalyseur organomercurique, des amines tertiaires telle le triéthylènediamine.

Pour fabriquer la couche adhésive selon l'invention, on peut opérer par coulée d'une solution de polyuréthane dans un solvant ou dans un mélange de solvants. On peut aussi fabriquer la couche par extrusion.

La couche adhésive peut être formée in situ sur l'un des éléments à assembler, c'est-à-dire par exemple dans le cas où la couche adhésive est utilisée pour faire adhérer la couche ayant des propriétés d'antilacération et d'autocicatrisation sur le support, ladite couche adhésive pourra être formée in situ sur le support rigide monilithe ou feuilleté ou de préférence comme précisé par la suite sur la couche de matière plastique ayant des propriétés d'antilacération et d'autocicatrisation, et ce au cours d'un processus de fabrication en continu d'une feuille à deux couches.

Dans ce cas on peut fabriquer une feuille à deux couches de la façon suivante: on fabrique tout d'abord une première couche qui peut être soit la couche adhésive selon l'invention, soit la couche de matière plastique autocicatrisable formée notamment d'un polyuréthane thermodurcissable; et sur cette première couche, on forme la deuxième couche.

On peut aussi fabriquer tout d'abord une couche de polyuréthane thermodurcissable par coulée du mélange des composants sur un support de coulée. Après polymérisation des monomères et formation d'une couche thermodurcissable d'épaisseur pouvant varier entre 0,1 et 0,8 mm, on coule sur cette première couche une solution du polyuréthane selon l'invention. On peut encore procéder de façon inverse, c'est-à-dire en formant d'abord la couche adhésive de polyuréthane selon l'invention.

La couche adhésive selon l'invention peut être utilisée uniquement en tant qu'adhésif pour l'assemblage de la couche de matière plastique présentant des propriétés d'antilacération et d'autocicatrisation avec les autres éléments du vitrage feuilleté.

La couche adhésive selon l'invention peut encore être utilisée pour la fabrication d'autres types de vitrages feuilletés, en verre et/ou en matière plastique.

Ainsi la couche adhésive peut être utilisée pour la fabrication de vitrage feuilleté en matière plastique. Elle est alors placée par exemple entre deux feuilles ou couches de matières plastiques, par exemple en polycarbonate, en matière plastique cellulosique, en matière acrylique tel le polyméthacrylate de méthyle, le chlorure de polyvinyle, le polystyrène, le polyéthylènetéréphthalate, les polyuréthanes.

La couche selon l'invention peut contenir d'autres additifs qui servent généralement à faciliter sa fabrication. Elle peut ainsi contenir un agent nappant tel une résine silicone, un ester fluoroalkylé.

Pour fabriquer des vitrages feuilletés utilisant la couche de polyuréthane selon l'invention, on assemble les éléments par utilisation de la pression, par exemple par pinçage des éléments entre les rouleaux d'une calandreuse, et par action de la chaleur. Avantageusement un des éléments est revêtu au préalable de la couche adhésive. Ce peut être le cas échéant la couche de matière thermodurcissable dans le cas de la feuille à deux couches décrite précédemment.

Le vitrage feuilleté obtenu est clair, sa qualité optique excellente et l'adhésion entre les éléments reliés par la couche adhésive selon l'invention est également excellente. Ces propriétés de transparence et d'adhésion se conservent même sous des conditions extrêmes de température, d'humidité et de lumière et notamment après une exposition durant 2 heures dans de l'eau bouillante.

Les exemples ci-après illustrent l'invention.

*Exemple 1*

2551 grammes (7,97 équivalents) de poly (1,4-oxybutylène) glycol de masse moléculaire 650 sont mélangés avec 880 grammes (3,42 équivalents) de dimérol. Le mélange est dissout dans 150 grammes de dioxane pour former une solution à 25%. On ajoute 0,01 grammes de dilaurate de dibutylétain. Après quoi, on ajoute finalement 1569 grammes (11,96 équivalents) de 4,4'-méthylène-bis(cyclohexyl)diisocyanate. Le rapport molaire NCO/OH est ainsi porté à 1,05. Le mélange est chauffé sous reflux à 100 –105°C sous agitation et sous atmosphère d'azote jusqu'à ce que la réaction soit complète ce qui est déterminé par un taux nul en isocyanate. Après refroidissement à 50°C, la solution est diluée jusqu'à une concentration de 10% en matières solides par addition de 150 grammes de méthyléthylcétone et de 150 grammes de tétrahydrofurane. On obtient une solution très transparente qui est caractérisée par une viscosité de 35 mPa · s à 23°C. On coule ensuite cette solution sur un support plan en verre. La couche obtenue après séchage présente une excellente qualité optique et une excellente adhésion avec le verre. Ces propriétés sont conservées après une exposition de 2 heures dans de l'eau bouillante.

A titre de comparaison, lorsqu'on fabrique un polyuréthane avec les mêmes composants mais en remplaçant l'allongeur de chaîne type dimérol par le 1,4-butanediol, la couche adhésive devient trouble et son adhésion avec le support est dégradée après exposition dans l'eau bouillante durant 2 heures.

Ceci met en évidence l'avantage d'utiliser un allongeur de chaîne du type dimérol pour la fabrication du polyuréthane.

*Exemple 2*

On opère de la même façon que dans l'exemple 1, sauf qu'on utilise un rapport isocyanate/polyol long de 1,6 au lieu de 1,5 comme dans l'exemple 1. Ainsi, 2407 grammes (7,52 équivalents) de poly (1,4-oxybutylène)glycol de la masse moléculaire 650, 1014 grammes (3,94 équivalents) de dimérol et 0,01 grammes de dilaurate de dibutylétain sont dissous dans 150 grammes de dioxane. Après addition de 1759 grammes (12,04 équivalents) de 4,4'-méthxlène-bis(cyclohexyl)diisocyanate, on procède comme décrit dans l'exemple 1.

La solution à 10% de matières solides obtenue après addition de 150 grammes de méthyléthylcétone et de 150 grammes de tétrahydrofurane est claire et a une viscosité de 30 mPa · s à 23°C. Après coulée sur un support en verre et séchage, la couche en polyuréthane présente également une excellente adhésion et une excellente qualité optique, même après une exposition de 2 heures dans de l'eau bouillante.

*Exemple 3*

On opère toujours comme décrit dans l'exemple 1, sauf que cette fois le rapport isocyanate/polyol long est porté à 1,8. Ainsi, le mélange réactif est constitué de 2163 grammes (6,76 équivalents) de poly (1,4-oxybutylène)glycol, de 1241 grammes (4,83 équivalents) de dimérol et de 1596 grammes (12,17 équivalents) de 4,4'-méthylène-bis(cyclohexyl)di-isocyanate. Le catalyseur et les solvants sont ajoutés comme dans les exemples précédents. La solution obtenue a une viscosité de 40 mPa · s et donne un film clair qui résiste à la dégradation dans de l'eau bouillante pendant 2 heures.

*Exemple 4*

Le mode opératoire est comme dans l'exemple 2; le rapport isocyanate/polyol long est cependant porté à 2,0. On fait ainsi réagir 1963 grammes (6,13 équivalents) de poly (1,4-oxybutylène)glycol, 1428 grammes (5,55 équivalents) de dimérol et 1610 grammes (12,27 équivalents) de 4,4'-méthylène--bis(cyclohexyl)diisocyanate. La solution obtenue est claire et a une viscosité de 55 mPa · s à 23°C.

Un film en polyuréthane obtenu par coulée sur un support en verre présente une bonne qualité optique et une excellen te adhésion, même après 2 heures dans de l'eau bouillante.

*Exemple 5*

Dans cet exemple, on utilise en tant que polyol long un poly(caprolactone)glycol de masse moléculaire nominale 1200. L'allongeur de chaîne reste le dimérol. Ainsi on fait réagir 2980 grammes (4,81 équivalents) de ce poly(caprolactone)glycol, 884 grammes (3,44 équivalents) de dimérol et 1136 grammes (8,66 équivalents) de 4,4'-méthylène-bis(cyclohexyl)diisocyanate. Les quantités de solvants et de catalyseur sont les mêmes que dans les exemples précédents. La viscosité de la solution claire obtenue est de 40 mPa · s à 23°C. La qualité optique et l'adhésion sur le verre sont bonnes. Il n'y a pas de dégradation dans de l'eau bouillante pendant 2 heures.

*Exemple 6*

On opère comme dans l'exemple 5, sauf qu'on porte le rapport isocyanate/polyol long à 2,0 au lieu de 1,8 comme dans l'exemple 5. On fait donc réagir 2778 grammes (4,49 équivalents) de poly(caprolac-tone)glycol de masse moléculaire 1200, 1044 grammes (4,06 équivalents) de dimérol et 1178 grammes (8,98 équivalents) de 4,4'-méthylène-bis (cyclohexyl) diisocyanate. La solution obtenue par la méthode décrite auparavant a une viscosité de 35 mPa · s à 23°C. Le film obtenu a des propriétés satisfaisantes même après 2 heures dans de l'eau bouillante.

*Exemple 7*

Dans cet exemple on utilise un poly(carbonate)glycol à base de 1,6-hexaméthylène-glycol de masse moléculaire nominale de 600 en tant que polyol long. On prend 2045 grammes (7,04 équivalents) de ce polyol, et 1293 grammes (5,03 équivalents) de dimérol qu'on fait réagir avec 1667 grammes (12,71 équivalents) de 4,4'-méthylène-bis(cyclohexyl)diisocyanate, le reste de l'opération étant le même que dans les exemples précédents. La solution obtenue est claire et a une viscosité de 30 mPa · s à 23°C. Après coulée sur un support en verre et séchage, on obtient un film transparent ayant de bonne propriétés optiques et une bonne adhésion.

Ces propriétés sont conservées même après 2 heures dans de l'eau bouillante.

*Exemple 8*

On opère comme dans l'exemple 7, sauf qu'on porte le rapport isocyanate/polyol long à 2,0 au lieu de 1,8 comme dans l'exemple 7. On fait donc réagir 1850 grammes (6,37 équivalents) de poly (1,6-hexaméthylènecarbonate)glycol de la masse 600 et 1480 grammes (5,76 équivalents) de dimérol avec 1670 grammes (12,73 équivalents) de 4,4'-méthylène-bis(cyclohexyl)diisocyanate. La solution obtenue par la méthode décrite dans les exemples précédents a une viscosité de 35 mPa · s à 23°C. Le film obtenu présente une bonne transparence, et une bonne adhésion même près 2 heures dans de l'eau bouillante.

**Revendications**

1. Couche adhésive transparente à base de polyuréthane caractérisée en ce que le polyuréthane est formé à partir d'au moins un diisocyanate aliphatique ou cycloaliphatique, d'au moins un polyol choisi parmi les polyétherdiols, les polycaprolactonediols, les polycarbonatediols, les polybutadiènediols, et d'au moins un allongeur de chaîne qui est un diol issu de la réduction des groupes carboxyliques en alcooliques de l'acide dimérique; cet acide à 36 atomes de carbone étant un produit de dimérisation type Diels-Alder d'acides gras insaturés comprenant 18 atomes de carbone, et un plus caractérisé par deux ou plusieurs branches latérales alkylkées et au moins une double liaison oléfinique.

2. Couche adhésive transparente selon la revendication 1, caractérisée en ce que le diisocyanate aliphatique est choisi parmi le groupe constitué par le 4,4'-méthylène-bis(cyclohexyl) diisocyanate, le trans-cyclohexane-1,4-diisocyanate, l'isophorone diisocyanate, l'hexaméthylène diisocyanate, le diméryldiisocyanate.

3. Couche adhésive transparente selon la revendication 2, caractérisée en ce que le diisocyanate est choisi parmi le trans-cyclohexane-1,4-diisocyanate, le 4,4'-méthylène-bis(cyclohexyl)diisocyanate.

4. Couche adhésive transparente selon une des revendications 1 à 3, caractérisée en ce que le polyol est un polyétherdiol choisi parmi les poly (1,4-oxy-butylène)diols et les poly(oxypropylène)diols.

5. Couche adhésive transparente selon la revendication 4, caractérisée en ce que le polyol est le poly(1,4-oxybutylène)diol.

6. Couche adhésive transparente selon une des revendications 1 à 5, caractérisée en ce que le polyol présente une masse moléculaire comprise entre 300 et 3000.

7. Vitrage feuilleté comprenant une couche adhésive selon une des revendications 1 à 6.

8. Vitrage feuilleté selon la revendication 7, caractérisé en ce que la couche adhésive est disposée entre deux feuilles en verre.

9. Vitrage feuilleté selon la revendication 7, caractérisé en ce que la couche adhésive est disposée entre une feuille de verre et une feuille de matière plastique.

10. Vitrage feuilleté selon la revendication 9, caractérisé en ce que la couche adhésive est disposée entre une feuille de verre et une couche de matière plastique ayant des propriétés d'autocicatrisation et d'antilacération en polyuréthane thermodurcissable.

11. Vitrage feuilleté selon la revendication 7, caractérisé en ce que la couche adhésive est disposée entre deux feuilles ou couches de matière plastique choisies parmi le polycarbonate, les matières cellulosiques, les matières acryliques telles que le polyméthacrylate de méthyle, le chlorure de polyvinyle, le polystyrène, le polyéthylènetéréphtalate, les polyuréthanes.

12. Feuille de matière plastique transparente, de haute qualité optique utilisée dans la fabrication des vitrages feuilletés comprenant deux couches, une couche de matière plastique présentant des propriétés d'autocicatrisation et d'antilacération, notamment un polyuréthane thermodurcissable et une couche de matière plastique présentant des propriétés d'adhésion, caractérisée en ce que la couche de matière plastique présentant des propriétés d'adhésion est la couche adhésive selon une des revendications 1 à 6.

## Patentansprüche

1. Transparente Klebeschicht auf Polyurethangrundlage, dadurch gekennzeichnet, dass das Polyurethan aus mindestens einem aliphatischen oder cycloaliphatischen Diisocyanat, mindestens einem Polyol, ausgewählt aus den Polyetherdiolen, den Polycaprolactondiolen, den Polycarbonatdiolen, den Polybutadiendiolen und aus mindestens einem Kettenverlängerungsmittel gebildet ist, das ein Diol ist, entstanden durch Reduktion der Carboxylgruppen einer dimeren Säure zu alkoholischen Gruppen, wobei diese Säure 36 Kohlenstoffatome aufweist, das Produkt einer Diels-Alder-Dimerisation von ungesättigten Fettsäuren mit 18 Kohlenstoffatomen ist und weiter charakterisiert ist durch zwei oder mehr Alkylseitenketten und mindestens eine olefinische Doppelbildung.

2. Transparente Klebeschicht nach Anspruch 1, dadurch gekennzeichnet, dass das aliphatische Diisocyanat ausgewählt ist aus der Gruppe bestehend aus 4,4'-Methylenbis(cyclohexyl)diisocyanat, trans-Cyclohexan-1,4-diisocyanat, Isophorondiisocyanat, Hexamethylendiisocyanat, Dimerydiisocyanat.

3. Transparente Klebeschicht nach Anspruch 2, dadurch gekennzeichnet, dass das Diisocyanat aus trans-Cyclohexan-1,4-diisocyanat und 4,4'-Methylenbis(cyclohexyl)diisocyanat ausgewählt ist.

4. Transparente Klebeschicht nach einem der Ansprüche 1 bis 3, dadurch gekennzeichnet, dass das Polyol ein Polyetherdiol ausgewählt aus den Poly-(1,4-oxybutylen)diolen und den Poly(oxypropylen)-diolen ist.

5. Transparente Klebeschicht nach Anspruch 4, dadurch gekennzeichnet, dass das Polyol das Poly(1,4-oxybutylen)diol ist.

6. Transparente Klebeschicht nach einem der Ansprüche 1 bis 5, dadurch gekennzeichnet, dass das Polyol ein Molekulargewicht zwischen 300 und 3000 aufweist.

7. Verbundglas umfassend eine Klebeschicht nach einem der Ansprüche 1 bis 6.

8. Verbundglas nach Anspruch 7, dadurch gekennzeichnet, dass die Klebeschicht zwischen zwei Glasscheiben angeordnet ist.

9. Verbundglas nach Anspruch 7, dadurch gekennzeichnet, dass die Klebeschicht zwischen einer Glasscheibe und einer Kunststofffolie angeordnet ist.

10. Verbundglas nach Anspruch 9, dadurch gekennzeichnet, dass die Klebeschicht zwischen einer Glasscheibe und einer Kunststoffschicht aus wärmehärtbarem Polyurethan angeordnet ist, wobei das Kunststoffmaterial selbstheilend und reissfest ist.

11. Verbundglas nach Anspruch 7, dadurch gekennzeichnet, dass die Klebeschicht zwischen zwei Folien oder Schichten aus Kunststoffmaterial angeordnet ist, das ausgewählt ist aus Polycarbonat, Cellulosematerialien, Acrylmaterialien, wie Polymethylmethacrylat, Polyvinylchlorid, Polystyrol, Polyethylenterephthalat, Polyurethanen.

12. Transparente Kunststofffolie hoher optischer Qualität, geeignet zur Herstellung von Verbundglas mit zwei Schichten, wobei eine Schicht aus Kunststoffmaterial selbstheilende und reissfeste Eigenschaften aufweist, insbesondere ein wärmehärtbares Polyurethan und eine Schicht aus Kunststoffmaterial Klebeeigenschaften aufweist, dadurch gekennzeichnet, dass die Schicht aus Kunststoffmaterial mit den Klebeeigenschaften die Klebeschicht nach einem der Ansprüche 1 bis 6 ist.

## Claims

1. Transparent adhesive layer based upon polyurethane, characterized in that the polyurethane is formed from at least one aliphatic or cycloaliphatic diisocyanate, at least one polyol selected from among the polyether diols, the polycaprolactone diols, the polycarbonate diols, the polybutadiene diols, and at least one chain lengthener which is a diol resulting from the reduction of carboxylic groups into alcoholic groups of dimeric acid; this acid has 36 carbon atoms being a product of dimerisation of the Diels-Alder type of unsaturated fatty acids comprising 18 carbon atoms, and furthermore characterized by two or more alkylated lateral branches and at least one olefinic double bond.

2. Transparent adhesive layer according to claim 1, characterized in that the aliphatic diisocyanate is selected from the group constituted of 4,4'-methylene-bis (cyclohexyl) diisocyanate, transcyclohexane-1, 4-diisocyanate, isophorone diisocyanate, hexamethylene diisocyanate, dimeryl diisocyanate.

3. Transparent adhesive layer according to claim 2, characterized in that the diisocyanate is selected from among trans-cyclohexane-1, 4-diisocyanate, 4,4'-methylene-bis (cyclohexyl) diisocyanate.

4. Transparent adhesive layer according to one of claims 1 to 3, characterized in that the polyol is a polyether diol selected from the poly (1,4-oxybutylene) diols and the poly (oxypropylene) diols.

5. Transparent adhesive layer according to claim 4, characterized in that the polyol is poly(1,4-oxybutylene) diol.

6. Transparent adhesive layer according to one of claims 1 to 5, characterized in that the polyol has a molecular weight of from 300 to 3,000.

7. Laminated pane comprising an adhesive layer according to one of claims 1 to 6.

8. Laminated pane according to claim 7, characterized in that the adhesive layer is disposed between two sheets of glass.

9. Laminated pane according to claim 7, characterized in that the adhesive layer is disposed between a glass sheet and a sheet of plastics material.

10. Laminated pane according to claim 9, characterized in that the adhesive layer is disposed between a glass sheet and a layer of plastics material having self-healing and anti-laceration properties of thermo-hardening polyurethane.

11. Laminated pane according to claim 7, characterized in that the adhesive layer is disposed between two sheets or layers of plastics material selected from polycarbonate, cellulose materials, acrylic materials such as polymethyl methacrylate, polyvinyl chloride, polystyrene, polyethylene terephthalate, polyurethanes.

12. Sheet of transparent plastics material of high optical quality, used in the production of laminated panes comprising two layers, a layer of plastics material possessing self-healing and antilaceration properties, notably a thermo-hardening polyurethane, and a layer of plastics material possessing adhesive properties, characterized in that the layer of plastics material having adhesive properties is the adhesive layer according to claims 1 to 6.